# EUROPEAN PATENT APPLICATION

(11) **EP 4 357 406 A1**
(43) Date of publication of application: **24.04.2024**
(21) Application number: 22202486.1
(22) Date of filing: 19.10.2022
(51) Int. Cl.: C08L 23/06, C08L 23/08, C08L 23/04, C08F 2/00, C08F 110/02, C08F 210/02

(54) **POLYETHYLENE COMPOSITION COMPRISING A POST-CONSUMER POLYETHYLENE RESIN AND ARTICLES MADE THEREOF**

(71) Applicant: Thai Polyethylene Co., Ltd., 21150 Rayong (TH); SCG Chemicals Public Company Limited, 10800 Bangkok (TH)
(72) Inventor: Phutthasattha, Kunthalee, 10800 Bangkok (TH); Suk-em, Chatdao, 10800 Bangkok (TH); Nilsen, Jorunn, 10800 Bangkok (TH); Poondee, Meenakorn, 10800 Bangkok (TH); Tangchareetsakull, Pornthip, 10800 Bangkok (TH); Cheevasrirungruang, Watcharee, 10800 Bangkok (TH)
(74) Representative: Erbacher, Martin

(57) **Abstract**

The present invention relates to a polyethylene composition, and blow-molded product made from said composition. The polyethylene composition made from blending together postconsumer recycled (PCR) resin and virgin polyethylene composition without additives, while exhibiting excellent properties for blow-molding application.

## Description

### TECHNICAL FIELD

The present invention relates to a polyethylene composition comprising a post-consumer polyethylene resin, and blow-molded product made from said composition.

### BACKGROUND

Plastic waste is one of the most increasing environmental concerns. One of the most important approaches on the reduction of plastic wastes is the plastic recycling. Through plastic recycling process, plastic waste is collected and re-converted into useable products. The recycling process can be of mechanical or chemical nature. Although various plastic recycling processes have been developed, there is still a need to overcome the economic and technological scalability challenges. As one of the stop-gap measures and also one of the readily available recycling processes implements on the commercial scale, mechanical recycling is the preferred process to lessen the severity of such plastic waste problem.

In mechanical recycling of plastic waste, the used plastic is reintroduced into the plastic life cycle after collection and sorting of the post-consumer resin (PCR) and/or post-industrial recycled (PIR) materials.

Although the mechanical recycling processes of plastic are widely known and implemented, generally the polyethylene compositions with PCR and/or PIR material have inferior mechanical properties when compared to their virgin counterparts (that is, resins before consumer use, respectively industrial use). The inferior properties result probably from thermoplastic degradation caused by repetitive heating during processing. Moreover, branching, scission, and impurities from various plastic sources can have a negative impact on the resulting resin properties. Thus, conventional polyethylene compositions containing or consisting of PCR material do not have mechanical properties suitable for blow molding applications. Especially, they do not have the necessary environmental stress crack resistance (ESCR) for blow molding of large containers.

In order to obtain polyethylene composition comprising significant amounts of PCR and having the desired stress crack resistance for blow molding application, it is generally known to blend the PCR material with virgin materials.

US 10,894,877 B2 and US 2021/0095107 A1 disclose HDPE compositions obtained from blending two different virgin polyethylene resins with two different PCR resins at about near equal ratio and 0.5-2.0 w/w% antioxidant additive. The total PCR components used in these works could be further increased while further improvement is needed for higher ESCR. The amount of antioxidant additives added during compounding process can be considered as introduction of more environmentally concerning chemicals to the recycling process.

Generally, plastic additives, especially antioxidants, are added in small amounts during resin manufacturing or compounding stages to prevent degradation during processing, storage, and use. However, many types of antioxidants are known as hazardous substances with toxicity to living animals and for causing environmental problems. Cumulative additions of these chemicals during recycling processes raise major concerns to health and environmental impacts. However, in the absence of these additional antioxidants, especially when using PCR resins and compositions with high PCR content, the performance is inferior compared to their virgin counterparts when re-introduced into plastic lifecycle. Thus, there is also a need to find PCR compositions with high PCR content having good performance when compared to virgin material with lower needs for additional plastic stabilizers.

EP 3 074 464 B1 describes a process to produce HDPE compositions having PCR resin where the virgin HDPE having HLMI between 5-75 g/10 min, and PCR resin having HLMI between 40-70 g/10 min. However, the resulting polyethylene composition with PCR having ESCR 10% between 57-103 hours which is not satisfactory for chemical resistance application. Thus, there is still need for improvements on polyethylene PCR composition with high ESCR to serve for such applications.

It is, therefore an object of the present invention to provide a PCR-containing polyethylene composition overcoming drawbacks of the prior arts, especially to provide a PCR-containing composition with good mechanical properties, especially high flexural modulus while retaining processability, making the PCR-containing composition suitable for blow molding application with higher ESCR requirements.

### DETAILED DESCRIPTION

The above object is achieved in accordance with the subject matter of the independent claims. Further embodiments result from the subclaims and the following detailed description

The present invention relates to a polyethylene composition, the use of the polyethylene composition, and to blow-molded products made from said polyethylene composition.

Specifically, the present invention relates to a polyethylene composition comprising: a) virgin multimodal (such as trimodal) polyethylene composition having certain ranges of melt flow index, and/or polydispersity index; and b) post-consumer polyethylene resin.

More specifically, the polyethylene composition of the present invention comprises: a) a virgin trimodal polyethylene composition (a) having certain ranges of melt flow index, and/or polydispersity index; and b) post-consumer polyethylene resin (b).

The present invention relates to a polyethylene composition comprising:
a) 5 to 85 wt.-%, with respect to the total weight of the polyethylene composition, of a virgin trimodal polyethylene composition (a) having i) a melt flow index (MI₂) from 0.01 to 0.06 g/10 min determined according to ASTM D1238 at 190°C with load 2.16 kg; and/or ii) a polydispersity index (PDI) from 10 to 33 determined by gel-permeation chromatography (GPC); and
b) 15 to 85 wt.-%, with respect to the total weight of the polyethylene composition, of a post-consumer polyethylene resin (b).

It was surprisingly found that a trimodal virgin polyethylene with certain MI₂ and/or PDI can improve the ESCR of a PCR composition when being mixed therewith while retaining high flexural modulus of virgin polyethylene composition. In this way, a PCR-containing composition suitable for blow molding application with higher ESCR requirements can be achieved.

Hereinafter, the present invention is now described in details with respect to the preferred embodiments. Various aspects of the present invention can be fully understood by way of examples. It is to be understood that the invention is not limited to particular methods, components, compositions, or devices as described.

The polyethylene composition may comprise the virgin trimodal polyethylene and the post-consumer polyethylene resin in a total amount selected from the group consisting of at least 70 wt.-%, at least 80 wt.-%, at least 90 wt.-%, at least 95 wt.-%, at least 98 wt.-%, and at least 99 wt.-%, with respect to the total weight of the polyethylene composition, respectively. The polyethylene composition may essentially consist of the virgin trimodal polyethylene and the post-consumer polyethylene resin. The polyethylene composition may consist of the virgin trimodal polyethylene and the post-consumer polyethylene resin.

The polyethylene composition may further comprise one or more additives, preferably selected from group consisting of fillers, reinforced fibers, stabilizers, antioxidants, plasticizers, lubricants, antistatics, nucleating agents, colorants, and/or processing aids. In particular, the polyethylene composition may comprise one or more stabilizers, such as organic phosphites, phenols, lactones, vitamin E, thiosynergist, or combinations thereof. Nonlimiting examples of preferred stabilizers suitable for this application are tris(2,4-di-tert-butylphenyl)phosphite (Irgafos 168), di(2,4-di-tert-butylphenyl)pentaerithritol diphosphite (Ultranox 626), pentaerythrityl tetrakis(3,5-di-tert-butyl-4-hydroxyphenyl) propionate (Irganox 1010), octadecyl-3-[3,5-di-tert-butyl-4-hydroxyphenyl]propionate] (Irganox 1076), bis (2,4-dicumylphenyl) pentaerythritol diphosphite (Doverphos S-9228), dilauryl thiodipropionate (Songnox DLTDP), 3,4-Dihydro-2,5,7,8-tetramethyl-2-(4,8,12-trimethyltridecyl)-2H-1-benzopyran-6-ol (Irganox E 201), 2,2-bis[[3-(dodecylthio)-i-oxopropoxylmethyllpropane-1,3-diyl-bis[3-(dodecylthio)propionate] (Naugard 412S), More preferably, the polyethylene composition may comprise Irgafos 168. The additives added can be added in an amount of from 0.01 to 0.3 wt.-%, such as from 0.05 to 0.2 wt.-%, with respect to the total weight of the polyethylene composition. Preferably, the polyethylene composition comprises Irgafos 168 in an amount of from 0.08 to 0.12 wt.-%, with respect to the total weight of the polyethylene composition.

The term "Post Consumer Composition" or "Post-Consumer Resin", which may be abbreviated as "PCR", is used to denote the component of the plastic composition or resin obtained from processing of domestic waste after use by consumer, which consists preferably of polyethylene, such as high density polyethylene packaging. As such, the post-consumer polyethylene resin is obtained from processing of domestic waste after its respective first use by consumer. "The term "post-consumer" or "post consumer" as used herein may refer to waste or recycled products consisting of or incorporating, such as in an amount of at least 50wt.-%, such as at least 90 wt.-%, material discarded by end users rather than generated during a manufacturing process.

The term "virgin" as used herein refers to a material not discarded by end users but rather generated during a manufacturing process. In other words, the term "virgin" refers to material obtained before first used by consumer and not recycled material. Thus, the virgin trimodal polyethylene composition refers to trimodal polyethylene composition generated from manufacturing process and before first use by consumer. Preferably, the virgin trimodal polyethylene composition (a) has a polydispersity index (PDI) selected from the group consisting of from 13 to 33, from 14 to 32, from 15 to 28, and from 16 to 25, such as about 16 or about 24.8, as determined by gel-permeation chromatography (GPC).

Preferably, the virgin trimodal polyethylene composition (a) of the present invention has a density selected from the group consisting of from 0.910 to 0.975 g/cm³, from 0.920 to 0.970 g/cm³, from 0.930 to 0.965 g/cm³, from 0.940 to 0.960 g/cm3; and from 0.940 to 0.950 g/cm³, such as about 0.947 to about 0.948 g/cm³.

Preferably, the virgin trimodal polyethylene composition (a) has a melt flow index (MI₂) selected from the group consisting of from 0.02 to 0.06 g/10 min, from 0.03 to 0.06 g/10 min, from 0.04 to 0.06 g/10 min, such as about 0.045 to 0.05 g/10 min, determined according to ASTM D1238 at 190°C with load 2.16 kg.

The virgin trimodal polyethylene composition (a) of this invention may comprise:
(A) 40 to 60 percent by weight, preferably 43 to 55 percent by weight of a low molecular weight polyethylene, with respect to the total weight of the virgin trimodal polyethylene composition (a), wherein the low molecular weight polyethylene is a homopolymer, the low molecular weight polyethylene has a weight average molecular weight (Mw) of 20,000 to 90,000 g/mol measured by Gel Permeation Chromatography,
(B) 10 to 30 percent by weight, preferably 15 to 25 percent by weight of a first high molecular weight polyethylene, with respect to the total weight of the virgin trimodal polyethylene composition (a), wherein the first high molecular weight polyethylene is a homopolymer or a copolymer, and the first high molecular weight polyethylene has a weight average molecular weight (Mw) of from 150,000 to 1,200,000 g/mol, preferably 300,000 to 900,000 g/mol, more preferably 350,000 to 800,000 g/mol, and most preferably 400,000 to 750,000 g/mol measured by Gel Permeation Chromatography; and
(C) 15 to 40 percent by weight, preferably 20 to 38 percent by weight of a second high molecular weight polyethylene, with respect to the total weight of the virgin trimodal polyethylene composition (a), wherein the second high molecular weight polyethylene is a homopolymer or a copolymer, wherein the second high molecular weight polyethylene has a weight average molecular weight (Mw) of from 130,000 to 1,500,000 g/mol, preferably 350,000 to 1,200,000 g/mol, more preferably 450,000 to 1,000,000 g/mol, and most preferably 700,000 to 900,000 g/mol measured by Gel Permeation Chromatography;
wherein
the first high molecular weight polyethylene differs from the second high molecular weight polyethylene with respect to the weight average molecular weight.

The virgin trimodal polyethylene composition (a) may have a weight average molecular weight from 130,000 to 400,000 g/mol, preferably from 140,000 to 350,000 g/mol, more preferably from 150,000 to 300,000, most preferably from 160,000 to 250,000 g/mol, and/or a number average molecular weight from 5,000 to 15,000 g/mol, preferably 7,000 to 13,000 g/mol, more preferably from 10,000 to 12,000 g/mol, and/or a Z average molecular weight from 950,000 to 3,000,000 g/mol, preferably 1,000,000 to 2,500,000 g/mol, more preferably from 1,000,000 to 2,000,000 g/mol as measured by Gel Permeation Chromatography (GPC), respectively.

Preferably, the post-consumer polyethylene resin (b) comprises non-black polyethylene, for example is selected from, but not limited to, a group consisting of white colored bottle source, natural colored bottle source, or combination thereof. Preferably, the white colored bottle source or natural colored bottle source is selected from personal care bottle, health care bottle, milk bottle, saline bottle, or combination thereof.

Preferably, the post-consumer polyethylene resin (b) has a MI₂ selected from the group consisting of from 0.05 to 0.5 g/10 min, 0.1 to 0.5 g/min, 0.3 to 0.5 g/10 min; and from 0.4 to 0.5 g/10 min, such as about 0.425 g/10 min; determined according to ASTM D1238 at 190°C with load 2.16 kg.

Preferably, the post-consumer polyethylene resin (b) of the present invention has a MI₂ from 0.1 to 0.45 g/10 min determined according to ASTM D1238. at 190°C with load 2.16 kg More preferably, the post-consumer polyethylene resin (b) has a MI₂ from 0.3 to 0.43 g/10 min as determined according to ASTM D1238 at 190°C with load 2.16 kg.

Preferably, the post-consumer polyethylene resin (b) of the present invention has a density selected from the group consisting of from 0.910 to 0.975 g/cm³, from 0.940 to 0.975 g/cm³, from 0.950 to 0.975 g/cm³ from 0.965 to 0.975 g/cm3; from 0.967 to 0.973 g/cm³, from 0.970 to 0.972 g/cm³, such as about 0.971 g/10 min.

Preferably, the post-consumer polyethylene resin (b) of the present invention has a PDI selected from the group consisting of from 12 to 33, from 13 to 32, from 13 to 28, from 14 to 19, from 14 to 18, from 14 to 16, and from 14 to 15, such as about 14.2.Preferably, the polyethylene composition comprises the virgin trimodal polyethylene composition (a) in an amount selected from the group consisting of from 15 to 80 wt.-%, and from 20 to 75 wt.-%, with respect to the total weight of the polyethylene composition, respectively.

Preferably, the polyethylene composition comprises the post-consumer polyethylene resin in an amount selected from the group consisting of from 20 to 80 wt.-%, and from 25 to 80 wt.-%, with respect to the total weight of the polyethylene composition, respectively.

Preferably, the polyethylene composition has an ESCR (F₅₀) selected from the group consisting of more than 300 hours, more than 320 hours, more than 340 hours , more than 360 hours, and more than 380 hours, determined according to ASTM D 1693.

Preferably, the polyethylene composition has an ESCR (F₅₀) selected from the group consisting of from 300 to 2000 hours, from 320 to 1500 hours, from 340 to 1250 hours, from 360 to 1200 hours, and from 380 to 1100 hours, determined according to ASTM D 1693.

Preferably, the polyethylene composition has an IZOD impact strength selected from the group consisting of more than 85 J/m, more than 90 J/m, more than 95 J/m, more than 100 J/m, more than 105 J/m, and more than 110 J/m, determined at 23 °C according to ASTM D256.

Preferably, the polyethylene composition has an IZOD impact strength selected from the group consisting of from 85 J/m to 500 J/m, from 90 J/m to 450 J/m, from 95 J/m to 400 J/m, from 100 J/m to 350 J/m, from 105 J/m to 325 J/m, and from 110 J/m to 310 J/m, determined at 23 °C according to ASTM D256.

Preferably, the polyethylene composition has a flexural modulus selected from the group consisting of from 8,500 to 11,000 kg/cm², from 8,600 to 10,500 kg/cm², from 8,700 to 10,250 kg/cm², from 8,800 to 10,000 kg/cm², and from 9,000 to 9,900 kg/cm², determined according to ASTM D790.

Preferably, the polyethylene composition has a density selected from the group consisting of from 0.940 to 0.980 g/cm3; from 0.950 to 0.975 g/cm3; from 0.952 to 0.970 g/cm3; and from 0.953 to 0.969 g/cm³.

Preferably, the polyethylene composition has a MI₂ selected from the group consisting of from 0.05 to 0.3 g/10 min; from 0.75 to 0.29 g/10 min; and from 0.1 to 0.277 g/10 min; determined according to ASTM D1238 at 190°C with load 2.16 kg.

Preferably, the polyethylene composition has a viscosity at 50 rad/s selected from the group consisting of from 2,250 to 3,500 Pa.s; from 2,300 to 3,250 Pa.s; from 2,300 to 3,250 Pa.s; from 2,400 to 3,100 Pa.s; and from 2,500 to 3,000 Pa.s.

In one preferred embodiment of the present invention, the polyethylene composition comprises:
a) 15 to 85 wt% of a virgin polyethylene composition (a) having i) a melt flow index (MI₂) between 0.01 to 0.05 g/10 min determined according to ASTM D1238 at 190°C with load 2.16 kg; and/or ii) a polydispersity index (PDI) from 13 to 33 determined by gel-permeation chromatography (GPC); and
b) 15 to 85 wt% of a post-consumer polyethylene resin (b) having a density from 0.940 to 0.960 g/cm3;
wherein the composition has the following properties:
- a flexural modulus according to ASTM D790 from 8,500 to 11,000 kg/cm²; and
- an IZOD impact strength of more than 85 J/m at 23 °C according to ASTM D256.

In another embodiment of the present invention, the polyethylene composition is a polyethylene composition for blow molding application comprising:
a) 15 to 80 wt% of virgin trimodal polyethylene composition having (a) having i) a melt flow index (MI₂) of from 0.02 to 0.05 g/10 min determined according to ASTM D1238 at 190°C with load 2.16 kg; and/or ii) a polydispersity index (PDI) from 14 to 32 determined by gel-permeation chromatography (GPC); and
b) 20 to 85 wt% of post-consumer polyethylene resin (b) selected from white colored personal care bottle source, a neutral colored personal care bottle source, a white colored health care bottle source; and a neutral colored health care bottle source;
wherein the polyethylene composition has the following properties:
- a flexural modulus from 8,500 to 11,000 kg/cm² according to ASTM D790; and
- and IZOD impact strength of more than 85 J/m at 23 °C according to ASTM D256.

The object is further achieved by the use of the polyethylene composition according to the present invention in a blow molding process.

The object is further achieved by a process for preparing an article, the process comprising a step of blow molding the polyethylene composition according to the present invention. The article may be, for example, a container, a bottle, an automotive part, a can, a cooler, a stadium seat, a chair or, in more general any type of hollow part., most preferred a container.

The object is further achieved by a container comprising the polyethylene composition according to the present invention. It is preferred that the container comprises the polyethylene composition according to the present invention in an amount selected from the group consisting of at least 50 wt.-%, at least 60 wt.-%, at least 70 wt.-%, at least 80 wt.-%, at least 90 wt.-%, at least 95 wt.-%, at least 98 wt.-%, and at least 99 wt.-%, with respect to the total weight of the container. The container may essentially consist of the polyethylene composition according to the present invention. The container may consist of the polyethylene composition according to the present invention.

### Details of the virgin trimodal polyethylene composition (a) and the method for preparing the same

The virgin trimodal polyethylene composition (a) may be produced via a reactor system for producing the virgin trimodal polyethylene by polymerization. The system may comprise a first reactor, a second reactor, a third reactor and a hydrogen removal unit placed between the first reactor and the second reactor.

The hydrogen depleted polyethylene from the first reactor affects the polymerization of high molecular weight in the subsequent reactors. In particular, high molecular weight leads to improved mechanical properties of polyethylene.

A catalyst for producing the virgin trimodal polyethylene composition of this invention may be selected from a Ziegler-Natta catalyst; a single site catalyst including metallocene-bases catalyst and non- metallocene-bases catalyst, or chromium based catalyst; or combinations thereof. Preferably, conventional Ziegler-Natta catalyst or single site catalyst is used. The catalyst is typically used together with co-catalysts which are well known in the art.

The polymerization in the first reactor, the second reactor, and subsequently the third reactor may be carried out in the presence of an inert hydrocarbon. The inert hydrocarbon is preferably aliphatic hydrocarbon including hexane, isohexane, neohexene, heptane, isoheptane, neoheptane, butane, isobutane. Preferably, hexane (most preferred n-hexane) is used.

Catalyst, ethylene, hydrogen, and optionally α-olefin comonomer may be reacted in the first reactor. The entire product obtained from the first reactor may then be transferred to the hydrogen removal unit to remove 98.0 to 99.8%, such as from 98.0 to 99.1% by weight of hydrogen, unreacted gas and some volatiles from the slurry obtained in the first reactor before being fed to the second reactor to continue the polymerization.

The polyethylene obtained from the second reactor is a bimodal polyethylene which is the combination of the product obtained from the first reactor and that of the second reactor. This bimodal polyethylene is then fed to the third reactor to continue the polymerization. The final virgin trimodal polyethylene composition (a) obtained from the third reactor is the mixture of the polymers from the first, the second, and the third reactor. Polyethylenes prepared in each of the first, the second, and the third reactor (corresponding to the constituents (A) to (C) of the inventive virgin trimodal polyethylene composition (a), respectively) differ from each other, for example, with respect to the weight average molecular weight thereof. It may be provided that the first high molecular weight polyethylene has a higher weight average molecular weight than the second high molecular weight polyethylene, or vice-versa.

The polymerization in the first, the second, and the third reactor may be conducted under different process conditions. As a result, the polyethylenes obtained in each reactor (corresponding to the constituents (A) to (C), respectively) may have a different molecular weight. The different process conditions can be the variation in concentration of ethylene and hydrogen in the vapor phase, of the temperature, or the amount of comonomer being fed to each reactor. Appropriate conditions for obtaining a respective homo- or copolymer of desired properties, in particularly of desired molecular weight, are well known in the art. The person skilled in the art is enabled on basis of his general knowledge to choose the respective conditions on this basis.

Preferably, low molecular weight polyethylene is produced in the first reactor, while a first high molecular weight polyethylene is produced in the second reactor and a second high molecular weight polyethylene is produced in the third reactor.

The term first reactor refers to the stage where the low molecular weight polyethylene (LMW) is produced. The term second reactor refers to the stage where the first high molecular weight polyethylene (HMW1) is produced. The term third reactor refers to the stage where the second high molecular weight polyethylene (HMW2) is produced.

The term LMW refers to the low molecular weight polyethylene polymer polymerized in the first reactor having a weight average molecular weight (Mw) of 20,000-90,000 g/mol.

The term HMW1 refers to the first high molecular weight polyethylene polymer polymerized in the second reactor having a weight average molecular weight (Mw) of from 150,000 to 1,200,000 g/mol, preferably 300,000 to 900,000 g/mol, more preferably 350,000 to 800,000 g/mol, and most preferably 400,000 to 750,000 g/mol

The term HMW2 refers to the second high molecular weight polyethylene polymer polymerized in the third reactor having the weight average molecular weight (Mw) of from 130,000 to 1,500,000 g/mol, preferably 350,000 to 1,200,000 g/mol, more preferably 450,000 to 1,000,000 g/mol, and most preferably 700,000 to 900,000 g/mol measured by Gel Permeation Chromatography;.

The LMW may be produced in the first reactor in the absence of comonomer in order to obtain a homopolymer.

The ethylene may be polymerized in the first reactor in the absence of comonomer in order to obtain high density LMW polyethylene having density ≥0.965 g/cm³ and MI₂ in the range of 10-1000 g/10 min for LMW. In order to obtain the target density and MI in the first reactor, the polymerization conditions are controlled and adjusted. The temperature in the first reactor ranges from 70-90°C, preferably 80-85°C. Hydrogen is fed to the first reactor so as to control the molecular weight of the polyethylene. The molar ratio of hydrogen to ethylene in the vapor phase can be varied depending up on the target MI. However, the preferred molar ratio ranges from 0.01-8.0, more preferably 0.01-6.0. The first reactor is operated at pressure between 250 and 900 kPa, preferably 400-850 kPa. An amount of hydrogen present in the vapor phase of the first reactor is in the range of 0.1-95% by mol, preferably 0.1-90% by mol.

Before being fed to the second reactor, the slurry obtained from the first reactor containing LMW polyethylene preferably in hexane may be transferred to a hydrogen removal unit which may have a flash drum connected with depressurization equipment preferably including one or the combination of vacuum pump, compressor, blower and ejector where the pressure in the flash drum is reduced so that volatile, unreacted gas, and hydrogen are removed from the slurry stream. The operating pressure of the hydrogen removal unit typically ranges from 103-145 kPa(abs), preferably 104-130 kPa(abs) in which 98.0 to 99.8% by weight of hydrogen can be removed from the slurry, preferably 98.0 to 99.5% by weight and most preferred 98.0 to 99.1 % by weight.

In this invention, when 98.0 to 99.8% by weight of hydrogen is removed from the slurry and the polymerization in the second reactor is performed under these conditions of hydrogen content, (very) high molecular weight polymer can be achieved. The polymerization conditions of the second reactor are notably different from that of the first reactor. The temperature in the second reactor ranges from 65-90°C, preferably 68-80°C. The molar ratio of hydrogen to ethylene is not controlled in this reactor since hydrogen is not fed into the second reactor. Hydrogen in the second reactor is the hydrogen left over from the first reactor that remains in slurry stream after being flashed at the hydrogen removal unit. Polymerization pressure in the second reactor ranges from 100-3000 kPa, preferably 150-900 kPa, more preferably 150-400 kPa.

Hydrogen removal is the comparison result of the amount of the hydrogen present in the slurry mixture before and after passing through the hydrogen removal unit. The calculation of hydrogen removal is performed according to the measurement of gas composition in the first and the second reactor by gas chromatography.

After the substantial amount of hydrogen is removed to achieve the concentration described above, the slurry obtained in the hydrogen removal unit is transferred to the second reactor to continue the polymerization. In this reactor, ethylene can be polymerized with or without α-olefin comonomer to form HMW1 polyethylene in the presence of the LMW polyethylene obtained from the first reactor. The α-olefin comonomer that is useful for the copolymerization may include C₄₋₁₂, preferably 1-butene or 1-hexene.

After the polymerization in the second reactor, the slurry obtained therein is transferred to the third reactor to continue the polymerization.

The HMW2 is produced in the third reactor by polymerizing ethylene with optionally α-olefin comonomer in the presence of LMW and HMW1 obtained from the first and second reactor. The α-olefin comonomer that is useful for the copolymerization include C₄₋₁₂, preferably 1-butene and 1-hexene.

In order to obtain the, if desired, preferred density and MI₂ in the third reactor, the polymerization conditions may be controlled and adjusted. However, the polymerization conditions of the third reactor are notably different from that of the first and second reactor. The temperature in the third reactor may range from 68-90°C preferably 68-80°C. Hydrogen is optionally fed to the third reactor so as to control the molecular weight of polyethylene. The molar ratio of hydrogen to ethylene can be varied depending up on the target MI. However, the preferred molar ratio ranges from 0.01-2.0. Polymerization pressure in the third reactor ranges from 250-900 kPa, preferably 250-600 kPa, and is controlled by the addition of inert gas such as nitrogen.

The final (free-flow) virgin trimodal polyethylene composition (a) may be obtained by separating hexane from the slurry discharged from the third reactor.

A process for producing the multimodal polyethylene composition may comprise the steps of;
(I) polymerizing ethylene in an inert hydrocarbon medium in the first reactor in the presence of a catalyst system, selected from Ziegler-Natta catalyst or metallocene, and hydrogen in an amount of 0.1-95% by mol with respect to the total gas present in the vapor phase in the first reactor to obtain a low molecular weight polyethylene having a weight average molecular weight (Mw) between 20,000 to 90,000 g/mol wherein the low molecular weight polyethylene, respectively the medium molecular weight polyethylene, has a density at least 0.960 g/cm³, and the low molecular weight polyethylene has MI₂ in the range between 10 to 1,000 g/10 min and the medium molecular weight polyethylene has MI₂ in the range between 0.1 to 10 g/10 min;
(II) removing hydrogen, in the hydrogen removal unit, 98.0 to 99.8% by weight, such as 98.0 to 99\.1% by weight of the hydrogen comprised in a slurry mixture obtained from the first reactor at a pressure in the range of 103-145 kPa (abs) and transferring the obtained residual mixture to the second reactor;
(III) polymerizing ethylene and optionally C₄ to C₁₂ α-olefin comonomer in the second reactor in the presence of a catalyst system, selected from Ziegler-Natta catalyst or metallocene, and in the presence of hydrogen in an amount obtained in step (b) to obtain a first high molecular weight polyethylene having a weight average molecular weight between 300,000 to 1,200,000 g/mol in the form of a homopolymer, or copolymer and transferring a resultant mixture to the third reactor; and
(IV) polymerizing ethylene, and optionally C₄ to C₁₂ α-olefin comonomer in the third reactor in the presence of a catalyst system, selected from Ziegler-Natta catalyst or metallocene, and hydrogen, wherein the amount of hydrogen in the third reactor is in a range of 0.1-70% by mol, preferably 0.1-60% by mol, with respect to the total gas present in the vapor phase in the third reactor or optionally substantial absence of hydrogen to obtain a second high molecular weight polyethylene having a weight average molecular weight between 130,000 to 1,500,000 g/mol homopolymer, or copolymer.

"Substantially absence" in this regard means that hydrogen is only comprised in the third reactor in an amount which cannot be avoided by technical means.

The virgin trimodal polyethylene composition (a) of the invention may be produced in a multistage process wherein fractions (A), (B) and (C) are produced in subsequent stages. In such a case, the properties of the fractions produced in the second step or the third step (or further steps) of the multistage process can either be inferred from polymers which are separately produced in a single stage by applying identical polymerization conditions (e.g. identical temperature, partial pressures of the reactants/diluents, suspension medium, reaction time) with regard to the stage of the multistage process in which the fraction is produced, and/or by using a catalyst on which no previously produced polymer is present. Alternatively, the properties of the fractions produced in a higher stage of the multistage process may also be calculated, e.g. in accordance with B. Hagstrom, Conference on Polymer Processing (The Polymer Processing Society), Extended Abstracts and Final Programme, Gothenburg, August 19 to 21, 1997, 4: 13.

Thus, although not directly measurable on the multistage process products, the properties of the fractions produced in higher stages of such a multistage process can be determined by applying either or both of the above methods. The skilled person will be able to select the appropriate method. One particular way of calculating the properties, such as the molecular weight (such as the weight average molecular weight, Mw) is by applying a deconvolution process using either Microsoft Excel spreadsheet, or any other calculation programs. In the deconvolution process subtraction of the respective signals is carried out.

The high density polyethylenes (HDPEs) produced in such multistage process can be designated as "in-situ" blends. The resulting end product consists of an intimate mixture of the polymers from the three or more reactors, the different molecular-weight-distribution curves of these polymers together forming a molecular-weight-distribution curve having a broad maximum or two or three or more maxima.

### Definitions and Measurement Methods

As used herein the term "polyethylene" refers to a polymer that comprises at least 50 % wt, still more preferably at least 75 % wt, still more preferably at least 85 % wt and yet more preferably at least 90 % wt units derived from ethylene. The remaining part of the polyethylene may be formed by copolymers, for example C₄ to C₁₀ α-olefin, such as 1-butene or 1-hexene.

As used herein the term "multimodal" refers to a polymer comprising a plurality of components or fractions, which have been produced under different polymerization conditions and/or by using a multisite catalyst system (e.g. a system having more than one type of active site) in one stage or step and/or by using two or more different catalysts in a polymerization stage or step resulting in different weight average molecular weights and molecular weight distributions for the components and/or in different comonomer contents. The prefix "multi" refers to the number of different components present in the polymer. Thus, for example, a polymer consisting of three components is called "trimodal".

As used herein the term "multimodal composition" refers to a composition comprising a plurality of components or fractions, which are each different in composition. Preferably the components or fractions each have a different constituent composition. Thus, for example, a composition comprising an ethylene homopolymer, an ethylene copolymer comprising 0.1 % wt comonomer and an ethylene copolymer comprising 0.5 % wt comonomer is a multimodal composition, specifically a trimodal composition.

Melt flow index (MI₂): Melt flow index (MI₂) of polymer was measured according to ASTM D 1238 and indicated in g/10 min that determines the flowability of polymer under testing condition at 190°C with load 2.16 kg.

Density: Density was measured by observing the level to which a pellet sinks in a liquid column gradient tube, in comparison with standards of known density. This method is determination of the solid plastic after annealing at 120°C following ASTM D 1505.

Molecular weight and Polydispersity index (PDI): The weight average molecular weight (Mw), the number average molecular weight (Mn) and the Z average molecular weight (Mz) in g/mol were analyzed using gel permeation chromatography (GPC). Polydispersity index was calculated by Mw/Mn. Around 8 mg of sample was dissolved in 8 ml of 1,2,4-trichlorobenzene at 160°C for 90 min. Then the sample solution, 200 µL, was injected into the high temperature GPC with IR₅, an infrared detector (Polymer Char, Spain) with flow rate of 0.5 ml/min at 145°C in column zone and 160°C in detector zone. The data was processed by GPC One^{®} software, Polymer Char, Spain.

The virgin trimodal polyethylene composition of the invention may be produced in a multistage process wherein fractions (A), (B) and (C) or fractions (A) and (B) are produced in subsequent stages. In such a case, the properties of the fractions produced in the second stage or the third stage (or further stages) of the multistage process can either be inferred from polymers which are separately produced in a single stage by applying identical polymerization conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagstrom, Conference on Polymer Processing (The Polymer Processing Society), Extended Abstracts and Final Programme, Gothenburg, August 19 to 21, 1997, 4: 13.

Thus, although not directly measurable on the multistage process products, the properties of the fractions produced in higher stages of such a multistage process can be determined by applying either or both of the above methods. The skilled person will be able to select the appropriate method. One particular way of calculating the properties, such as the molecular weight (e.g. Mw) is applying a deconvolution process using spreadsheet (e.g. Microsoft Excel), or other calculation programs. In the deconvolution process subtraction of the respective signals is carried out.

The catalyst for producing the virgin trimodal polyethylene composition of this invention may be selected from a Ziegler-Natta catalyst; a single site catalyst including metallocene-bases catalyst and non- metallocene-bases catalyst, or chromium based might be used; or combination thereof. Preferably, conventional Ziegler-Natta catalyst or single site catalyst is used. The catalyst is typically used together with co-catalysts which are well known in the art. A suitable Ziegler-Natta catalyst is, for example, described in the Hungarian patent application number 0800771R, especially in example 1 thereof.

Such polymerization in the first reactor, the second reactor and the third reactor may be carried out in the presence of an inert hydrocarbon. The inert hydrocarbon is preferably aliphatic hydrocarbon including hexane, isohexane, heptane, isobutene, or their corresponding isomers. Preferably, hexane is used.

Coordination catalyst, ethylene, hydrogen, and optionally α-olefin comonomer may be polymerized in the first reactor. The entire product obtained from such reactor may then be transferred to subsequent reactor(s) by either directly or passing through the hydrogen removal unit to remove substantially all of hydrogen, unreacted gas and some volatiles from the slurry obtained in previous reactor before being fed to the subsequent reactor to continue the polymerization. The polymerization in the first, the second and the third reactor may be conducted under different process conditions.

Flexural modulus: The sample was compressed and performed the test follow ASTM D790. The flexural tests were done using a universal testing machine equipped with three points bending fixture. The modulus at 2%secant was recorded to determine ability to withstand top-load.

IZOD impact strength test: The sample was compressed and performed the test follow ASTM D 256 at temperature 23°C to determine drop performance.

Environmental Stress-Cracking Resistance (ESCR): The sample was compressed and performed the test follow ASTM D 1693 METHOD B using 10% Igepal CO630 solution at 50°C. Time record at which 50% of samples were cracked is made to determine life-time of chemicals storage in bottles.

Viscosity at angular frequency 50 rad/s : The viscosity represent the flowability of molten polymer, which strongly related to the molding process. The Anton-Paar rheometer model MCR101 is used to determine the material. The circular disk 25 mm diameter with measurement gap 1 mm is prepared by compression molding at 190°C for testing by dynamic oscillatory shear stress. Viscosity at angular frequency of 50 rad/s is obtained from complex viscosity at specific angular frequency of 50 rad/s.

### Examples

In the following examples, inventive polyethylene compositions comprising PCR material and preparation thereof are described and discussed in detail.

The virgin trimodal polyethylene composition used is the virgin trimodal polyethylene composition was produced by series of slurry phase Ziegler-Natta process. A process for producing the virgin trimodal polyethylene composition comprises the steps of;
(I) polymerizing ethylene in an inert hydrocarbon medium in the first reactor in the presence of a Ziegler-Natta catalyst system, and hydrogen in an amount of 0.1-95% by mol with respect to the total gas present in the vapor phase in the first reactor to obtain a low molecular weight polyethylene having a weight average molecular weight (Mw) between 20,000 to 90,000 g/mol;
(II) removing hydrogen, in the hydrogen removal unit, until substantially absence of hydrogen in a slurry mixture obtained from the first reactor at a pressure in the range of 103-145 kPa (abs) and transferring the obtained residual mixture to the second reactor;
(III) polymerizing ethylene with C₄ α-olefin comonomer in the second reactor in the presence of a Ziegler-Natta catalyst system in the presence of hydrogen in an amount obtained in step (II) to obtain a first high molecular weight polyethylene having a weight average molecular weight between 300,000 to 1,200,000 g/mol in the form of a copolymer and transferring a resultant mixture to the third reactor; and
(IV) polymerizing ethylene with C₄ α-olefin comonomer in the third reactor in the presence of a Ziegler-Natta catalyst system and hydrogen, wherein the amount of hydrogen in the third reactor is in a range of 0.1-60% by mol, with respect to the total gas present in the vapor phase in the third reactor to obtain a second high molecular weight polyethylene having a weight average molecular weight between 130,000 to 1,500,000 g/mol measured by Gel Permeation Chromatography;.

Modality, polydispersity index (PDI), Melt flow index, and density of the virgin trimodal polyethylene composition used in the preferred embodiments of the inventive examples and comparative examples are shown in Table 1 below. It is worth noting that the inventive polyethylene compositions are not limited to the use of the following compositions.

The virgin multimodal polyethylene composition used was either virgin bimodal polyethylene compositions (Comparative HDPE1 and Comparative HDPE2) or virgin trimodal polyethylene compositions (HDPE1, HDPE2, and Comparative HDPE3).

HDPE1 has a density of 0.947 g/cm³ according to ASTM D1505, melt flow index of 0.050 g/10 min at 190 °C and 2.16 kg as measured according to ASTM D 1238, with 1-butene comonomer content as determined by FTIR of 0.71; comprising fraction (A) 55 percent by weight of a low molecular weight polyethylene, with respect to the total weight of the virgin trimodal polyethylene composition (a), wherein the low molecular weight polyethylene is a homopolymer having a weight average molecular weight (Mw) of from 35,000 to 50,000 g/mol measured by Gel Permeation Chromatography; fraction (B) 20 percent by weight of a first high molecular weight polyethylene, with respect to the total weight of the virgin trimodal polyethylene composition (a), having a weight average molecular weight (Mw) of from 600,000 to 700,000 g/mol measured by Gel Permeation Chromatography; and fraction (C) 25 percent by weight of a second high molecular weight polyethylene, with respect to the total weight of the virgin trimodal polyethylene composition (a), wherein the second high molecular weight polyethylene having a weight average molecular weight (Mw) of from 700,000 to 900,000 g/mol measured by Gel Permeation Chromatography; overall Mw of around 187,000 g/mol, Mw/Mn ratio (PDI) value of 16.0, and the Z average molecular weight (Mz) of around 1,080,000 g/mol as analyzed using gel permeation chromatography (GPC).

Also, HDPE2 has a density of 0.948 g/cm³ according to ASTM D1505, melt flow index of 0.045 g/10 min at 190 °C and 2.16 kg as measured according to ASTM D 1238, with 1-butene comonomer content as determined by FTIR of 0.67; comprising fraction (A) 55 percent by weight of a low molecular weight polyethylene, with respect to the total weight of the virgin trimodal polyethylene composition (a), wherein the low molecular weight polyethylene is a homopolymer having a weight average molecular weight (Mw) of from 40,000 to 50,000 g/mol measured by Gel Permeation Chromatography; fraction (B) 25 percent by weight of a first high molecular weight polyethylene, with respect to the total weight of the virgin trimodal polyethylene composition (a), having a weight average molecular weight (Mw) of from 650,000 to 750,000 g/mol measured by Gel Permeation Chromatography; and fraction (C) 20 percent by weight of a second high molecular weight polyethylene, with respect to the total weight of the virgin trimodal polyethylene composition (a), wherein the second high molecular weight polyethylene having a weight average molecular weight (Mw) of from 700,000 to 900,000 g/mol measured by Gel Permeation Chromatography; overall Mw of around 303,000 g/mol, Mw/Mn ratio (PDI) value of 24.8, and the Z average molecular weight (Mz) of around 1,950,000 g/mol as analyzed using gel permeation chromatography (GPC).

Comparative HDPE1 is a commercially available HDPE virgin bimodal polyethylene composition, namely H1000P of SCG Chemicals, having density of 0.949 g/cm³ according to ASTM D1505, melt flow index of 0.045 g/10 min at 190 °C and 2.16 kg as measured according to ASTM D 1238, with 1-butene comonomer content as determined by FTIR of 0.69, Mw of around 313,000 g/mol, Mw/Mn ratio (PDI) value of 28.4, and the Z average molecular weight (Mz) of around 2,230,000 g/mol as analyzed using gel permeation chromatography (GPC).

Comparative HDPE2 is a commercially available virgin bimodal polyethylene composition, namely H5840B of SCG Chemicals, having density of 0.955 g/cm³ according to ASTM D1505, melt flow index of 0.4 g/10 min at 190 °C and 2.16 kg as measured according to ASTM D 1238, with Mw around 303,000 g/mol, Mw/Mn ratio (PDI) value of 19.1 as analyzed using gel permeation chromatography (GPC).

Similar to HDPE1 and HDPE2, comparative HDPE3 is a virgin trimodal polyethylene composition having density of 0.956 g/cm³ according to ASTM D1505, melt flow index of 0.045 g/10 min at 190 °C and 2.16 kg as measured according to ASTM D 1238, with 1-butene comonomer content as determined by FTIR of 0.35; comprising fraction (A) 46 percent by weight of a low molecular weight polyethylene, with respect to the total weight of the virgin trimodal polyethylene composition (a), wherein the low molecular weight polyethylene is a homopolymer having a weight average molecular weight (Mw) of from 50,000 to 58,000 g/mol measured by Gel Permeation Chromatography; fraction (B) 24 percent by weight of a first high molecular weight polyethylene, with respect to the total weight of the virgin trimodal polyethylene composition (a), having a weight average molecular weight (Mw) of from 600,000 to 700,000 g/mol measured by Gel Permeation Chromatography; and fraction (C) 30 percent by weight of a second high molecular weight polyethylene, with respect to the total weight of the virgin trimodal polyethylene composition (a), wherein the second high molecular weight polyethylene having a weight average molecular weight (Mw) of from 400,000 to 500,000 g/mol measured by Gel Permeation Chromatography; overall Mw of around 330,000 g/mol, Mw/Mn ratio (PDI) value of 34.4, and the Z average molecular weight (Mz) of around 2,400,000 g/mol as analyzed using gel permeation chromatography (GPC).

The comparative HDPE1 and comparative HDPE2 are selected from commercially available resin composition as they both have similar density, Mw, and polydispersity index value to the HDPE1 and HDPE2. However, both comparative HDPE1 and comparative HDPE2 are of bimodal polyethylene. The comparative HDPE3 represents a generic trimodal resin composition for comparison with the HDPE1 and HDPE 2 since they all have nearly the same Mw, melt flow index and density values.

Summary of related modality, density, polydispersity index (PDI), and melt flow index (MI₂) values for HDPE1, HDPE2, Comparative HDPE1, Comparative HDPE2, Comparative HDPE3 are shown in Table 1 below.

The post-consumer resin (PCR) comprises non-black polyethylene. Specifically, the post-consumer resin is selected from white or natural colored bottle sources. More preferably, the white or natural colored bottle PCR is selected from a group including, but not limited to, personal care bottle, health care bottle, milk bottle, or saline bottle.

The PCR polyethylene composition (b) used as the examples was a PCR polyethylene composition obtained from mechanically processed, disposed used plastic products of white or natural colored high density polyethylene bottle source. The PCR polyethylene composition (b) having density of 0.971 g/cm³ according to ASTM D1505, polydispersity index (PDI) of 14.2 determined by gel-permeation chromatography (GPC), melt flow index of 0.425 g/10 min at 190 °C and 2.16 kg as measured according to ASTM D 1238. It is worth nothing that the ESCR value (F₅₀) of this particular PCR composition is 24 hours as measured according to ASTM D 1693 METHOD B. All compositions in example (both inventive examples, IE 1-5; and comparative examples, CE 1-5) are prepared by blending the post-consumer polyethylene (PCR) composition and the virgin trimodal virgin polyethylene composition in the amounts by weight percent as shown in Table 1. Furthermore, 0.1 wt.-% of Irgafos 168 stabilizer also used in the composition with respect to the total weight of the polyethylene composition and do not include any further additives unless explicitly stated.

The blended resin (= polyethylene composition) was pelletized through Haake Rheomex 19/25 OS single screw extruder L/D 25 at a temperature setting 180 - 190°C, screw speed 80 rpm, with resident time in the single screw extruder of more than 15 seconds to ensure the homogeneity and similarity of the material that pass through the extruder in the molding process. The preferred resident time of the blended compositions within the single screw extruder depended on the input and output amount of the resulting polyethylene composition, and can be adjusted accordingly.

Five compositions of the inventive examples (represent by IE 1 through IE 5, respectively) comprising the blends of virgin trimodal polyethylene composition (a) from HDPE 1 and HDPE 2; and PCR polyethylene composition (b) were prepared by blending both component (a) and (b) in single screw extruder with the various Virgin% (for component (a)) and PCR% (for component (b)) ratios are tabulated in Table 1. From the table, it is apparent that the ESCR of the composition (pellet) was more than 400 hours, in IE 1 through IE 4, and more than 300 hours in IE 5. All inventive compositions, IE 1 through IE 5, have a density above 0.950 g/cm³ and a melt flow index (MI₂) of at least 0.1 g/10 minutes.

In similar manner, five compositions of comparative examples (CE 1 to CE 5, respectively) were prepared by blending various ratios of PCR polyethylene composition (b) with either bimodal virgin polyethylene composition (CE 1 and CE 2), or trimodal virgin polyethylene compositions (CE 3, CE 4, and CE 5). CE 1 and CE 2 compositions of bimodal polyethylene composition with PCR composition is used for comparison of mechanical properties to the IE1 and IE5 from the trimodal polyethylene compositions. Moreover, CE3 represents the blends of PCR composition with generic trimodal polyethylene composition with high PDI, while the extreme cases of very low and very high amounts of virgin trimodal polyethylene composition blends are shown in CE4 and CE5, respectively.

**Table 1.**

| | | **IE 1** | **IE 2** | **IE 3** | **IE 4** | **IE 5** | **CE 1** | **CE 2** | **CE 3** | **CE 4** | **CE 5** |
|---|---|---|---|---|---|---|---|---|---|---|---|
| **Virgin Polyethylene Composition (a)** | | **HDPE1** | | | | **HDPE 2** | **Compara tive HDPE1** | **Compar ative HDPE2** | **Compara tive HDPE3** | **HDPE2** | |
| | Modality | Trimodal | | | | Trimo dal | Bimodal | Bimodal | Trimodal | Trimodal | |
| | PDI | 16 | | | | 24.8 | 28.4 | 19.1 | 34.4 | 24.8 | |
| | Density (g/cm³) | 0.947 | | | | 0.948 | 0.949 | 0.955 | 0.956 | 0.948 | |
| | MI₂ (g/10 min) | 0.05 | | | | 0.045 | 0.045 | 0.4 | 0.045 | 0.045 | |
| **PCR Polyethylene Composition (b)** | | | | | | | | | | | |
| | PDI | 14.2 | | | | | | | | | |
| | Density (g/cm³) | 0.971 | | | | | | | | | |
| | MI₂ (g/10 min) | 0.425 | | | | | | | | | |

| **Polyethylene composition** | | | | | | | | | | | |
|---|---|---|---|---|---|---|---|---|---|---|---|
| | Virgin wt.-% | 20 | 35 | 50 | 75 | 20 | 20 | 50 | 20 | 10 | 90 |
| | PCR wt.-% | 80 | 65 | 50 | 25 | 80 | 80 | 50 | 80 | 90 | 10 |

| **Physical Properties** | | | | | | | | | | | |
|---|---|---|---|---|---|---|---|---|---|---|---|
| | Density (g/cm³) | 0.968 6 | 0.953 | 0.969 | 0.968 5 | 0.967 3 | 0.97 | 0.963 | 0.971 | 0.959 | 0.95 |
| | MI₂ (g/10 min) | 0.239 | 0.11 | 0.13 | 0.1 | 0.277 | 0.24 | 0.407 | 0.225 | 0.263 | 0.05 7 |

| **Mechanical properties** | | | | | | | | | | | |
|---|---|---|---|---|---|---|---|---|---|---|---|
| | ESCR @ 50°C (F₅₀, hrs) | 456 | 1008 | 912 | 1008 | 384 | 156 | 84 | 96 | 24 | 100 8 |
| | Flexural Modulus (kg/cm²) | 9860 | 9175 | 9246 | 9049 | 9517 | 9824 | 9872 | 9847 | 9940 | 860 6 |
| | IZOD @ 23°C (J/m) | 112 | 231 | 145 | 305 | - | 51 | 158 | 56 | 127 | 402 |

| **Rheology properties** | | | | | | | | | | | |
|---|---|---|---|---|---|---|---|---|---|---|---|
| | Viscosity at 50 rad/s (Pa.s) | 2504 | 2963 | - | 2709 | - | - | - | - | 2202 | 375 9 |

When comparing inventive and comparative compositions with similar amounts (wt.-%) of virgin trimodal polyethylene composition and post-consumer polyethylene resin (PCR), e.g.IE 1 or IE 5, to CE 1 or CE 3, and IE 3 to CE 2, it can be seen that good flexural modulus (FM) is achieved together with high ESCR and IZOD values by using the trimodal polyethylene composition (a). Also, good ESCR for blow molding application where the environmental stress-cracking resistance of more than >300 hours is required can be achieved with the inventive examples.

Furthermore, it is also worth noting that in the inventive examples, the compositions have good ESCR when compared to their respective comparative examples. With IE 2 and IE4, the ESCR above of 1,000 hours indicates that the optimum amount for the blend is quite broad, and not directly depends on the virgin trimodal polyethylene composition (a). Whereas in conventional sense, good mechanical properties for the composition can be achieved only when the majority of the composition is composed of virgin trimodal polyethylene composition portion (CE 5).

It is also worth noting that in PCR product applications, the more usage of PCR content is preferred to reduce the virgin plastic consumption. However, the molding processability and mechanical strength of the finish product is also important.

As IE 1 and IE 5, at 80% of PCR the balance between stiffness and ESCR is excellent while the flowability that represent the processing is still good. At this condition, where the amount of PCR is high, the utilization of the virgin trimodal polyethylene composition (a) shows improvement when compared to comparative example CE 2.

In case where amount of PCR relative to the amount of virgin trimodal polyethylene composition is too high, as seen in CE 4, the mechanical properties suffer. This is probably due to the effects of virgin trimodal polyethylene composition (a) distribution of within the overall composition. Even though the flowability is applicable for the blow molding application, the added virgin trimodal polyethylene composition (a) cannot help to improve the overall performance of the compositions, resulting in low mechanical strength. Especially, the ESCR that is too low and not suitable from product application standpoint.

In applications which require high or extremely high mechanical strength, virgin trimodal polyethylene composition (a) could be added at higher content relative to the amount of PCR as shown in IE 2, IE 3 and IE 4. The overall ESCR of the inventive compositions show superior properties when compared to CE 1, CE 2, and CE 3. The high content of virgin trimodal polyethylene composition affects the composition with slight decrease of flowability as can be seen in IE 4. Also, when comparing the equal ratio of virgin trimodal polyethylene composition (a) content to PCR content (b) in the inventive example to the comparative example (IE 3 to CE 2), the inventive composition shows more environmental stress crack resistance, and retains good flexural modulus. However, it can be seen that when using virgin trimodal polyethylene composition (a) at lower content (IE 1 and IE 5), the compositions have far superior ESCR while providing enough mechanical strength for processability to their respective composition with same virgin to PCR ratios (CE 1 and CE 2). Additionally, CE 5 shows the case where one would tried to improve overall mechanical properties of PCR composition with large Virgin% in blow molding application where ESCR of more than 300 is preferred, the PCR% utilization in the composition is very low and does not contribute much in reducing the plastic waste consumption. Especially, when compared to the IE 2 or IE 4 of the present invention, although using much lower virgin trimodal polyethylene composition content, good mechanical properties is achieved together with higher flowability for processing.

From the inventive examples shown, it is clearly shown that the polyethylene composition consisting of PCR polyethylene composition (b) and virgin trimodal polyethylene composition (a) with certain MI and PDI ranges can surprisingly improve the environmental stress crack resistance of the overall polyethylene composition while retaining good mechanical properties, processability.

The features disclosed in the foregoing description and in the dependent claims may, both separately and in any combination thereof, be material for realizing the aspects of the disclosure made in the independent claims, in diverse forms thereof.

## Claims

1. A polyethylene composition comprising:
a. 15 to 85 wt.-%, with respect to the total weight of the polyethylene composition, of a virgin trimodal polyethylene composition (a) having i) a melt flow index (MI2) from 0.01 to 0.06 g/10 min determined according to ASTM D1238 at 190°C with load 2.16 kg; and/or ii) a polydispersity index (PDI) from 10 to 33 determined by gel-permeation chromatography (GPC); and
b. 15 to 85 wt.-%, with respect to the total weight of the polyethylene composition, of a post-consumer polyethylene resin (b).

2. The polyethylene composition according to claim 1, wherein the virgin trimodal polyethylene composition (a) has a polydispersity index (PDI) from 13 to 33, preferably from 14 to 32, determined by gel-permeation chromatography (GPC).

3. The polyethylene composition according to claim 1 or 2, wherein the post-consumer polyethylene resin (b) has a density from 0.910 to 0.975 g/cm³, preferably 0.940 to 0.960 g/cm³.

4. The polyethylene composition according to any of the preceding claims, wherein the post-consumer polyethylene resin (b) is selected from the group consisting of a white colored bottle source or a natural colored bottle source.

5. The polyethylene composition according to claim 4, wherein the white colored bottle source or the natural colored bottle source is selected from personal care bottle, health care bottle, milk bottle, or saline bottle or a combination thereof.

6. The polyethylene composition according to any of the preceding claims, wherein the polyethylene composition comprises from 15 to 80 wt.-% of the virgin trimodal polyethylene composition (a).

7. The polyethylene composition according to any of the preceding claims, wherein the post-consumer polyethylene resin (b) has a MI₂ from 0.05 to 0.5 g/10 min, preferably from 0.1 to 0.45 g/10 min determined according to ASTM D1238 at 190°C with load 2.16 kg.

8. The polyethylene composition according to any of the preceding claims, wherein the post-consumer polyethylene resin (b) has a MI₂ from 0.1 to 0.45 g/10 min determined according to ASTM D1238 at 190°C with load 2.16 kg.

9. The polyethylene composition according to any of the preceding claims, wherein the post-consumer polyethylene resin (b) has a MI₂ from 0.3 to 0.43 g/10 min determined according to ASTM D1238 at 190°C with load 2.16 kg.

10. The polyethylene composition according to any of the preceding claims wherein the polyethylene resin comprises:
a. 15 to 85 wt.-% of a virgin polyethylene composition (a) having i) a melt flow index (MI₂) from 0.01 to 0.05 g/10 min determined according to ASTM D1238 at 190°C with load 2.16 kg; and/or ii) a polydispersity index (PDI) from 13 to 33 as determined by gel-permeation chromatography (GPC); and
b. 15 to 85 wt.-% a post-consumer polyethylene resin (b) having a density from 0.940 to 0.960 g/cm3;
wherein the polyethylene composition has a flexural modulus between 8,500 to 11,000 kg/cm² according to ASTM D790; and
an IZOD impact strength of more than 85 J/m at 23°C according to ASTM D256.

11. Use of the polyethylene composition according to any of the preceding claims in a blow molding process.

12. Process for preparing an article, the process comprising a step of blow molding the polyethylene composition according to any of the claims 1 to 9.

13. Process according to claim 11, wherein the article is a container.

14. Container comprising the polyethylene composition according to any of the claims 1 to 9.
